# EUROPEAN PATENT SPECIFICATION

(11) **EP 2 405 322 B1**
(45) Date of publication and mention of the grant of the patent: **18.12.2013**
(21) Application number: 10748728.2
(22) Date of filing: 02.03.2010
(51) Int. Cl.: G06F 1/26, G06F 1/32

(54) **DISPLAY SYSTEM, DISPLAY CONTROLLER, COMPUTER PROGRAM AND MEMORY PRODUCT**
ANZEIGESYSTEM, ANZEIGESTEUERUNG, COMPUTERPROGRAMM UND SPEICHER
SYSTÈME D'AFFICHAGE, CONTRÔLEUR D'AFFICHAGE, PROGRAMME INFORMATIQUE ET MEMOIRE

(30) Priority: 04.03.2009 JP 2009050903
(43) Date of publication of application: 11.01.2012
(73) Proprietor: EIZO Corporation, Ishikawa (JP)
(72) Inventor: HIRATA, Naoaki, Hakusan-shi Ishikawa 924-8566 (JP); IDE, Akihiko, Hakusan-shi Ishikawa 924-8566 (JP); ARAI, Ikumi, Hakusan-shi Ishikawa 924-8566 (JP); MIYANAGA, Shuhei, Ishikawa 9248566 (JP); TANABE, Toshiaki, Ishikawa 9248566 (JP)
(74) Representative: Thibon, Laurent
(86) International application number: PCT/JP2010/053294
(87) International publication number: WO 2010/101133

(56) References cited:
- WO-A1-97/42559
- WO-A1-03/073402
- WO-A1-2004/036410
- JP-A- 11 167 438
- JP-A- 2000 187 475
- JP-A- 2000 242 140
- JP-T- 2009 506 355
- US-A1- 2003 051 182
- US-A1- 2008 150 855

## Description

### BACKGROUND

### 1. Technical Field

The present invention relates to: a display system in the so-called multi-monitor environment in which a plurality of monitors (display devices) are connected to a display control device such as a PC (personal computer); a display control device constituting the display system; a computer program; and a memory product.

### 2. Description of Related Art

Conventionally, in a PC such as a desktop PC, a display device, such as a monitor, and input devices, such as a mouse and a keyboard, are connected to the main unit of the PC in which a CPU (central processing unit), a hard disk, etc. are mounted. The main unit of the PC and the monitor are each provided with a power switch or the like, and the user is required to turn ON/OFF the power switches individually.

Japanese Patent Application Laid-Open No. 2007-233954 proposes a power management method in which the power of a display can be turned OFF in synchronization with the power OFF operation of a PC. With this power management method, when a user turns ON the power of the PC, the PC sends a power ON control signal to the display on the basis of a service program. Upon receiving this signal, the display turns ON the power of its power source unit. Furthermore, when the user turns OFF the power of the PC, the PC sends a power OFF control signal to the display on the basis of the service program. Upon receiving this signal, the display turns OFF the power of its power source unit. Moreover, in a configuration including a plurality of network-connected PCs, an administrative PC can send power ON/OFF instructions to the other PCs.

On the other hand, in a PC loaded with a multi-window OS (operating system), a plurality of application programs can be started and used simultaneously. The user works while displaying numerous windows on a monitor and while switching windows to be used. However, since the display area of one monitor is limited, the number of the windows that can be displayed simultaneously is restricted. Although the display area can be expanded by using a monitor having a larger size, this causes a problem of high cost. Hence, a display system in a multi-monitor environment has begun to spread in which to one PC a plurality of monitors are connected so that different kinds of information can be displayed on the respective monitors. In the display system in the multi-monitor environment, the display area thereof can be expanded at a relatively low cost in comparison with the case in which a monitor having a larger size is used.

In recent years, it is desired that when a PC is not used, the power of its monitor is turned OFF to save power from the viewpoint of the protection of global environment and the saving of energy resources, for example. In such a case, in the display system in the multi-monitor environment described above, the user is required to operate the power switches of the respective monitors to individually turn ON/OFF the power of the plurality of monitors. This causes a problem of more troublesome operation.

Various inventions have been developed to control a plurality of monitors in a display system in a multi-monitor environment. For example, Japanese Patent No. 3831538 proposes a power saving method for performing individual power management for a plurality of displays by using a computer to which a plurality of displays can be connected. In this power saving method, for example, the position of the mouse pointer and the position of the active window are checked on the plurality of displays. At a stage wherein a state in which these positions are not displayed on a specific display continues for a constant time, the display is switched to a low power consumption mode.

Japanese Patent Application Laid-Open No. H10-124018 proposes an image communication system capable of controlling each of a plurality of sub-monitors to be used, for example, for a conference room by using a computer. In this image communication system, the respective monitors can communicate with one another. The administrator of the system selects a monitor to be controlled and inputs functions to be controlled and data values to the selected monitor by operating the computer. When the control data input to a monitor is control data for the monitor, the microcomputer built in the monitor controls the monitor according to the control data. When the control data input to the monitor is the control data for another monitor, the microcomputer transfers the control data to the other monitor.

Japanese Patent Application Laid-Open No. 2004-362156 proposes a display device power management method capable of individually setting a wait time for the user to turn OFF each display device in an electronic appliance capable of simultaneously displaying the same display content on a plurality of display devices. In this display device power management method, a wait time until the power of each of the plurality of display devices is turned OFF is set individually on the setting screen of the electronic appliance. When a duration time during which the connection state of a display device is unchanged and the input devices thereof are not operated has reached the wait time in a display device among the display devices in which the wait time has been set, the power of the display device is turned OFF.

### SUMMARY

However, in the power management method described in Japanese Patent Application Laid-Open No. 2007-233954, the power ON/OFF operation of the PC is only synchronized with the power ON/OFF operation of the display. Hence, the power of the display cannot be turned OFF unless the power of the PC is turned OFF. For this reason, this method is not suited for the purpose of turning OFF the power of the display to save power consumption, for example, when the user who is working using the PC stops working for a short time. Furthermore, Japanese Patent Application Laid-Open No. 2007-233954 refers to a configuration including a plurality of network-connected PCs, but does not refer to a configuration in which one PC is equipped with a plurality of displays.

The power saving method described in Japanese Patent No. 3831538 is a method in which the usage states of the plurality of displays are checked depending on the position of the mouse pointer and the position of the active window, and unused displays are switched to the low power consumption mode. Hence, it is impossible to switch all the displays to the low power consumption mode. For example, even when the user who is working using the PC stops working for a short time, at least one display on which the mouse pointer or the active window is displayed is not switched to the low power consumption mode. Hence, sufficient power saving cannot be accomplished.

The image communication system described in Japanese Patent Application Laid-Open No. H10-124018 is not a system in which one user uses a plurality of monitors, but a system in which a plurality of users use a plurality of monitors at a conference room, for example, and an administrator can collectively control the plurality of monitors. For this reason, for example, when unused monitors are present, the administrator is required to turn ON/OFF the power of each monitor. Hence, troublesome operation for power saving cannot be eliminated with the image communication system.

The display device power management method described in Japanese Patent Application Laid-Open No. 2004-362156 is a method in which the wait time until the power of each of the plurality of display devices is turned OFF can be set individually. However, the wait time for each display device is different depending on the user. If the wait time is set short, the effect of power saving can be raised. However, there is a danger that the display device is turned OFF more than necessary and the convenience of the device is lowered. Hence, there is a danger that the user sets the wait time longer, whereby there is a danger that sufficient power saving effect is not obtained.

The present invention has been made with the aim of solving the above problems, and it is an object of the present invention to provide: a computer program; and a memory product. The solution is a set out in claims 1, 8 and 10 respectively.

In the present invention, a configuration is provided in which the plurality of display devices and the display control device, such as a PC, are connected so as to be communicatable, and the display control device controls the switching of the operation states of the display devices, for example, the displaying state in which an image is displayed and the low power state in which power consumption is low. Furthermore, at least one of the plurality of display devices is assumed to be a display device on which the human sensor for detecting the presence of a human is mounted (in other words, the human sensor is not always required to be mounted on all the display devices).
The human sensor is a sensor for detecting whether a human is present within a predetermined range using an infrared light wave or ultrasonic wave, for example, and the human sensor is conventionally a sensor that is used, for example, in the case of controlling the ON/OFF operation of lighting. When mounted on the display device, the human sensor can detect, for example, whether the user is present so as to face the front face of the display device, that is, whether the display device is used by the user.
The display control device obtains the result of the detection as to whether the user is present from the display device on which the human sensor is mounted. When the human sensor mounted on at least one display device detects the presence of the user in the so-called multi-monitor environment in which the plurality of display devices are used, the display control device can judge that the user is working using the multi-monitor environment. Hence, the display control device appropriately switches the operation state of the display device depending on whether the user is working in the multi-monitor environment by sending, via communication, an operation state switching instruction according to the obtained detection result of the human sensor, thereby being capable of accomplishing the control of the amount of power consumption.

When at least one human sensor has detected the presence of the user as described above, the display control device can judge that the user is working using the multi-monitor environment. Furthermore, when all the human sensors have detected the absence of the user (when the presence of the user is not detected), the display control device can judge that the user is not working using the multi-monitor environment.
Hence, in the present invention, when all the human sensors have detected the absence of a human, the display control device performs control for switching all the display devices to the low power state. As a result, when the user is not working in the multi-monitor environment, the display control device can reduce the power consumption amounts of the display devices. Moreover, when at least one human sensor has detected the presence of a human, the display control device should only perform control for switching all the display devices to the displaying state. Consequently, the display devices can perform display when the user starts work.

When the human sensor is mounted on each of the plurality of display devices, there is a possibility that any of human sensors cannot detect the presence of the user depending on the disposition of each display device even if the user is working in the multi-monitor environment. For example, when three display devices on each of which the human sensor is mounted are disposed at the center and on the left and right sides thereof, there is a high possibility that the user works while facing the display device disposed at the center. In this case, the human sensor mounted on the center display device can detect the presence of the user. However, the position of the user may be away from the detection ranges of the human sensors mounted on the left and right display devices, and there is a danger that the human sensors cannot detect the presence of the user. Conversely, there is a danger that the human sensors mounted on the left and right display devices may mistakenly detect humans irrelevant to the multi-monitor environment (for example, humans doing different jobs around the multi-monitor environment).
For this reason, the present invention is configured so that when the human sensor is mounted on each of the plurality of display devices, the user can set whether each human sensor is effective or ineffective, whereby the display devices can be controlled by using only the detection results of the human sensors having been set effective. Hence, since the user is well acquainted with, for example, the usage patterns of the respective display devices in the multi-monitor environment, when the user appropriately sets the effectiveness/ineffectiveness of the human sensors, the display control device can be allowed to perform control appropriately, whereby the reliability of the control by the display control device can be enhanced.

However, in the case of the configuration in which the user sets the effectiveness/ineffectiveness of the human sensors, there is a danger that, for example, if the user is a beginner, he or she cannot perform the setting appropriately. Hence, in the present invention, a configuration is provided in which information relating to the disposition of the plurality of display devices (for example, information relating to the number of the display devices, the order of the arrangement thereof, i.e., above, below, left and right, the display device which the user faces during work, etc.) is set by the user. The display control device judges whether each human sensor is effective or ineffective on the basis of the disposition information of the display devices given by the user. As a result, even an inexperienced user can use the control of the display devices in which the human sensors are used.

Furthermore, in the present invention, a configuration is provided in which the sensitivity of the human sensor mounted on the display device can be set by the user. It may also be possible to use a configuration in which, for example, the range of detecting the presence of a human can be increased or decreased as the sensitivity of the human sensor. For example, when humans other than the user who uses the multi-monitor environment and being present around the user are mistakenly detected, the detection range of the human sensor can be narrowed.
Moreover, for example, there is a danger that the human sensor may detect an object other than a human. However, even when the presence of an object is detected, if its position is unchanged, it is possible to identify that the object is a still object other than a human. When the human sensor is equipped with a function for identifying such a still object, it may be possible to use a configuration in which setting can be made as to whether this function is used as the sensitivity of the human sensor.
Besides, for example, the user who is working by using the multi-monitor environment does not completely stay still but the position of the user with respect to the display device moves during work. Hence, a configuration can be provided in which the range of this movement is stored and only when the position of the user detected by the human sensor is far away from the stored range, the absence of the user is detected. When the human sensor is equipped with a function for performing the detection based on the range of the movement, it may be possible to use a configuration in which setting can be made as to whether this function is used as the sensitivity of the human sensor.

Still further, in the present invention, the display control device for controlling the plurality of display devices is configured so as to be able to switch the operation states thereof between a low power state (for example, the so-called sleep mode or standby mode) in which power consumption is low and an ordinary operation state in which power consumption is high. In this case, when the plurality of display devices are switched to the low power state according to the detection results of the human sensors, the display control device itself is switched to the low power state. As a result, not only the power consumption of the display devices but also the power consumption of the display control device can be reduced.

Since the present invention is configured so that the operation state, relating to the power consumption, of the plurality of display devices including at least one display device on which the human sensor is mounted is controlled by the display control device according to the detection result of the human sensor, the display devices can be controlled appropriately depending on the working state of the user in the multi-monitor environment. Hence, when the plurality of display devices are not used, the power consumption thereof can be reduced, and power saving can be accomplished certainly.

### BRIEF DESCRIPTION OF THE SEVERAL VIEWS OF THE DRAWINGS

FIG 1 is a block diagram showing a configuration of a display system according to the present invention;
FIG. 2 is a block diagram showing a configuration of a display system according to the present invention;
FIG. 3 is a function block diagram showing a configuration of a display control device according to the present invention;
FIG. 4A is a schematic view illustrating the control of the monitors using the monitor state controlling means of the PC;
FIG. 4B is a schematic view illustrating the control of the monitors using the monitor state controlling means of the PC;
FIG. 4C is a schematic view illustrating the control of the monitors using the monitor state controlling means of the PC;
FIG. 5A is a schematic view illustrating the control of the monitors using the monitor state controlling means of the PC;
FIG. 5B is a schematic view illustrating the control of the monitors using the monitor state controlling means of the PC;
FIG. 5C is a schematic view illustrating the control of the monitors using the monitor state controlling means of the PC;
FIG. 6 is a schematic view illustrating an acceptance of the setting using the human sensor setting accepting means of the PC;
FIG. 7 is a schematic view illustrating an acceptance of the setting using the human sensor setting accepting means of the PC;
FIG. 8 is a table illustrating the level adjustment of the human sensor;
FIG. 9 is a schematic view illustrating an acceptance of the disposition information using the disposition information accepting means of the PC;
FIG. 10 is a flowchart showing a procedure of the process to be performed by the PC of the display system according to the present invention;
FIG. 11 is a flowchart showing a procedure of the process to be performed by the PC of the display system according to the present invention;
FIG. 12 is a flowchart showing a procedure of the power saving process to be performed by the PC of the display system according to the present invention; and
FIG. 13 is a flowchart showing a procedure of the process to be performed by the monitors of the display system according to the present invention.

### DETAILED DESCRIPTION

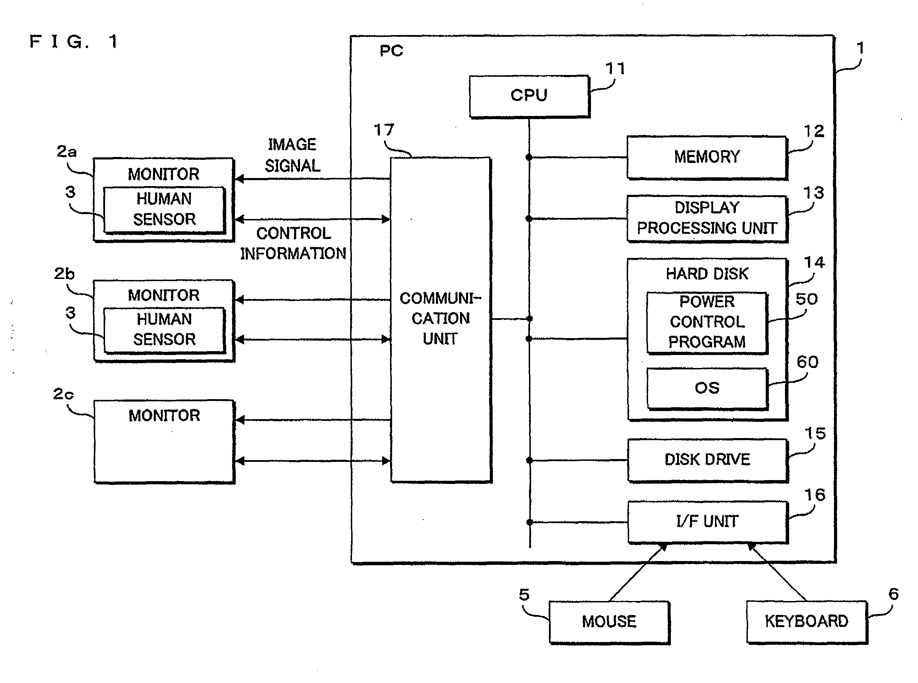

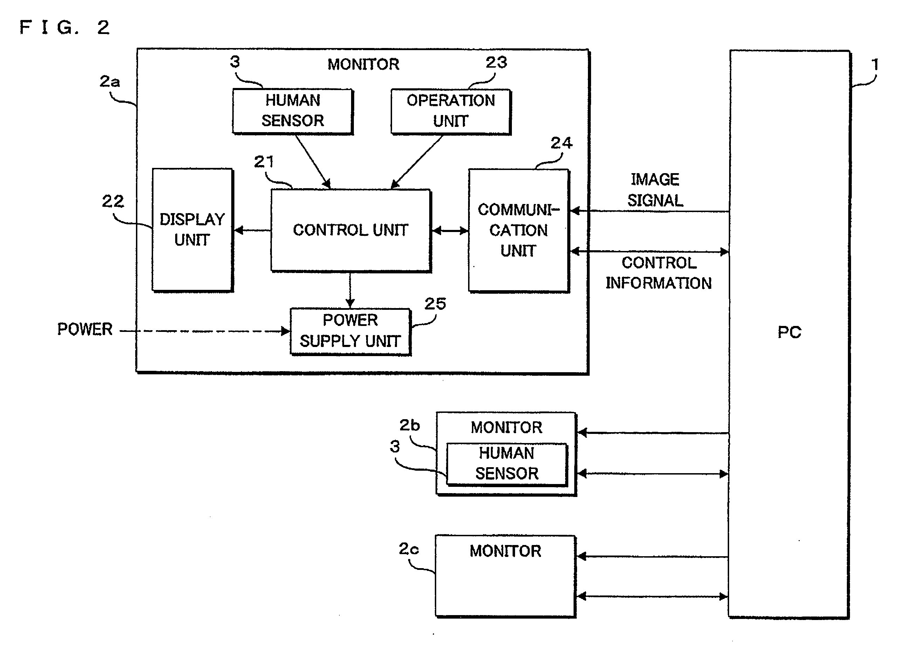

The following will describe in detail the present invention with reference to the drawings illustrating some embodiments thereof. FIGS. 1 and 2 are block diagrams showing the configurations of a display system according to the present invention. FIG. 1 shows the details of a display control device constituting the display system, and FIG. 2 shows the details of display devices constituting the display system. In the figures, numeral 1 designates a PC corresponding to the display control device constituting the display system according to the present invention. Furthermore, in the figures, numerals 2a to 2c respectively designate monitors corresponding to the display devices constituting the display system according to the present invention. In the example shown in the figures, the display system is configured by connecting the three monitors 2a to 2c to one PC.

The PC 1 is a general-purpose computer having a CPU (central processing unit) 11, a memory 12, a display processing unit 13, a hard disk 14, a disk drive 15, an I/F (interface) unit 16, and a communication unit 17, for example. Furthermore, three monitors 2a to 2c or more can be connected to the PC 1 according to this embodiment via communication cables, for example.

The CPU 11 reads and executes an OS (operating system) 60 and various computer programs preinstalled on the hard disk 14, thereby performing, for example, control process for various units inside the PC 1 and various kinds of arithmetic process. Furthermore, in the PC 1 according to the embodiment, the CPU 11 reads and executes a power control program 50 preinstalled on the hard disk 14, thereby being capable of performing control process (described later) for the monitors 2a to 2c connected to the PC 1.

The memory 12 is a memory device, such as an SRAM (static random access memory) or a DRAM (dynamic random access memory), and temporarily stores programs and data read from the hard disk 14 and data generated in the arithmetic process of the CPU 11, for example. The display processing unit 13 performs process for generating images to be displayed on the monitors 2a to 2c, performs various kinds of image process for the generated images and sends the processed image data to the communication unit 17.

The hard disk 14 is a storage device formed of a large capacity magnetic disk and stores, for example, various programs, such as the OS 60 and application programs for operating the PC 1, and data to be used by these programs. In particular, in the PC 1 according to the embodiment, the power control program 50 is preinstalled and stored on the hard disk 14. The disk drive 15 is used to read and write data on optical disc recording media, such as a CD (compact disc) and a DVD (digital versatile disc). The disk drive 15 reads programs and data from an optical disc and stores the programs and data on the hard disk 14, thereby being capable of installing the programs and data.

The I/F unit 16 has terminals for connection to input devices. In the example shown in the figure, a mouse 5 and a keyboard 6 are connected as input devices. The mouse 5 and the keyboard 6 accept user's operation as input signals and send the input signals to the I/F unit 16. The I/F unit 16 notifies the CPU 11 of the user's operation based on the input signals sent thereto.

The communication unit 17 has connection terminals conforming to the DVI (digital visual interface) standards, for example, thereby being capable of being connected to each of the monitors 2a to 2c via one cable. The communication unit 17 converts image data sent from the display processing unit 13 into image signals having a format suited for sending/receiving to/from the monitors 2a to 2c, and send the image signals to monitors 2a to 2c via the cables. Moreover, the communication unit 17 can perform two-way communication with each of the monitors 2a to 2c and can send/receive information relating to the operation control of the monitors 2a to 2c. Hence, the PC 1 can send instructions relating to control and can control the operations of the monitors 2a to 2c. Furthermore, the PC 1 can receive information from the monitors 2a to 2c and can recognize the operation states of the monitors 2a to 2c.

The communication unit 17 performs two-way communication with the monitors 2a to 2c according to the DDC/CI (display data channel/command interface) standards, for example. The communication unit 17 sends instructions for switching operation states and instructions for changing the setting, such as the brightness and saturation of image display, to the monitors 2a to 2c under the control of the CPU 11, and controls the operations of the monitors 2a to 2c. In addition, to the monitors 2a to 2c, the communication unit 17 sends the set values, such as the brightness and saturation set for the monitors 2a to 2c, and also sends requests for sending information, such as the operation states of the monitors 2a to 2c. Furthermore, the communication unit 17 receives responses to the sending requests from the monitors 2a to 2c, thereby obtaining the operation states of the monitors 2a to 2c.

The two monitors 2a and 2b of the three monitors 2a to 2c connected to the PC 1 are each equipped with a human sensor 3, and the remaining one monitor, the monitor 2c, is not equipped with the human sensor 3. The human sensor 3 is a sensor for detecting whether a human is present inside its predetermined detection range and can be configured so as to detect the presence of a human by emitting, for example, an infrared light wave or ultrasonic wave, and by detecting the reflected wave thereof (however, the method for detecting a human using the human sensor 3 is not limited to this method).

The monitor 2a has the above-mentioned human sensor 3, a display unit 22, an operation unit 23, a communication unit 24 and a power supply unit 25, and a control unit 21 for controlling these units. In FIG. 2, the detailed configuration of only the monitor 2a is shown, but the detailed configurations of the monitors 2b and 2c are not shown. The configuration of the monitor 2b is approximately the same as that of the monitor 2a. Furthermore, the configuration of the monitor 2c is approximately the same as that of the monitor 2a, except that the monitor 2c is not equipped with the human sensor 3.

The display unit 22 is, for example, a liquid crystal panel or a PDP (plasma display panel), and performs image display according to an image signal sent from the PC 1. The image signal from the PC 1 is received by the communication unit 24 of the monitor 2a, and the communication unit 24 sends the received image signal to the control unit 21. The control unit 21 converts the image signal sent thereto into a signal suited for the display on the display unit 22 and sends the converted signal to the display unit 22. The display unit 22 performs display according to the signal sent from the control unit 21.

The operation unit 23 is formed of a plurality of switches disposed on the housing of the monitor 2a. The operation unit 23 accepts, for example, user's power ON/OFF operation and user's operations for changing the set values, such as the brightness and saturation of image display, and notifies the control unit 21 of the operations.

The communication unit 24 has connection terminals conforming to the DVI standards, for example, and is connected to the PC 1 via a single cable. The communication unit 24 receives the image signal sent from the communication unit 17 of the PC 1 as described above and sends the image signal to the control unit 21. In addition, the communication unit 24 performs two-way communication with the PC 1 to send/receive control signals. At this time, the communication unit 24 can perform two-way communication with the PC 1 according to the DDC/CI standards, for example. When the communication unit 24 receives a request for sending an operation state or set values, for example, from the PC 1, the communication unit 24 notifies the control unit 21 of the received request. In response to this, the communication unit 24 sends, for example, the operation state or the set values sent from the control unit 21, to the PC 1. Furthermore, when the communication unit 24 receives an operation related instruction from the PC 1, the communication unit 24 sends the received instruction to the control unit 21, and the control unit 21 performs control process according to the instruction sent from the PC 1.

The power supply unit 25 converts commercial AC power into DC power and supplies the DC power to the various units of the monitor 2a, and the start/stop of power supply is controlled by the control unit 21. The monitor 2a can operate in three modes: an ordinary operation mode (displaying state) in which images are displayed on the display unit 22, a sleep mode (low power state) in which operations relating to image display are stopped and no image is displayed on the display unit 22 to reduce power consumption, and a power OFF mode (low power state) in which power supply to the various units from the power supply unit 25 is stopped to further reduce power consumption. However, in the sleep mode, the monitor 2a can use the human sensor 3 to detect the user and can send/receive control information sent from the PC 1 through the communication unit 24. When the communication unit 24 has received an instruction from the PC 1 and has notified to the control unit 21, the monitor 2a can return to the ordinary operation mode. Furthermore, in the power OFF mode, since power supply to the human sensors 3 is stopped, the monitor 2a cannot detect the user. However, since power is supplied to the control unit 21 and the communication unit 24, the monitor 2a can return to the ordinary operation mode according to an instruction from the PC 1.

The control unit 21 is used to perform the control process for the operations of the various units of the monitor 2a and various kinds of arithmetic process. For example, the control unit 21 converts an image signal sent from the PC 1 into a signal suited for the display on the display unit 22 and then outputs the converted signal to display an image on the display unit 22. Furthermore, for example, the control unit 21 changes the setting, such as the brightness and saturation, depending on the user's operation on the operation unit 23. Moreover, the control unit 21 of the monitor 2a according to the embodiment can perform switching in the three modes: the ordinary operation mode, the sleep mode and the power OFF mode described above at own discretion or according to an instruction from the PC 1, and can control the power consumption amount of the monitor 2a.

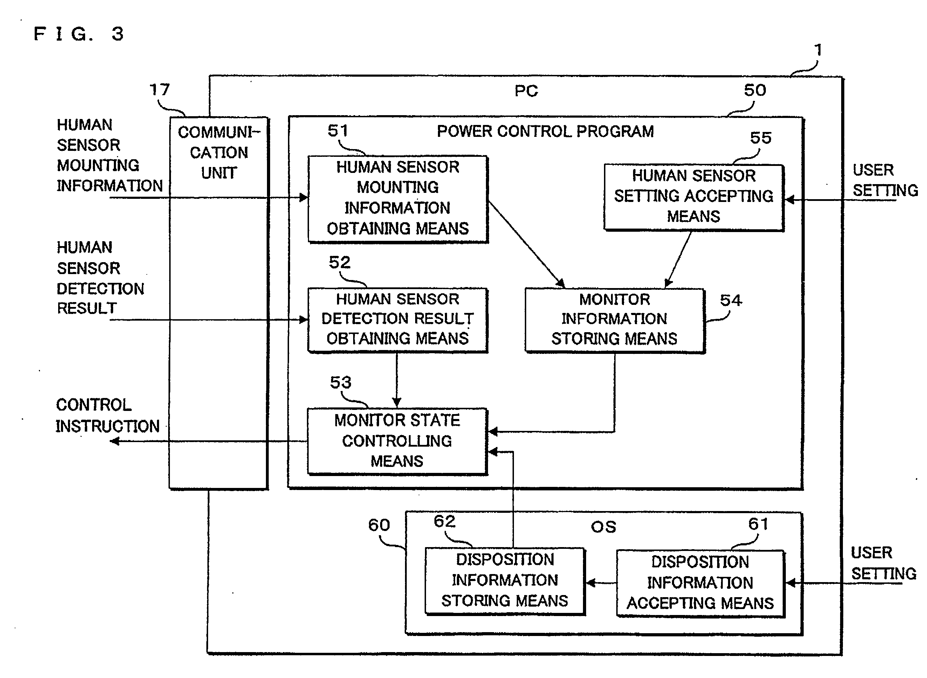

Still further, the PC 1 according to the embodiment executes the power control program 50 stored on the hard disk 14 using the CPU 11, thereby being capable of performing process for controlling the power consumption amounts of the plurality of monitors 2a to 2c connected to the communication unit 17. FIG. 3 is a function block diagram showing a configuration of the display control device according to the present invention, showing a configuration of software functions accomplished when the power control program 50 and the OS 60 are executed by the PC 1.

Human sensor mounting information obtaining means 51, human sensor detection result obtaining means 52, monitor state controlling means 53, monitor information storing means 54 and human sensor setting accepting means 55, for example, are accomplished by the PC 1 in which the power control program 50 has been executed. Furthermore, disposition information accepting means 61 and disposition information storing means 62, for example, are accomplished (as functions relating to the control of the power consumption amounts of the monitors 2a to 2c) by the PC 1 in which the OS 60 has been executed.

The human sensor mounting information obtaining means 51 performs communication with each of the plurality monitors 2a to 2c via the communication unit 17 and obtains information as to whether the human sensor 3 is mounted in each of the monitors 2a to 2c and then sends the obtained mounting information to the monitor information storing means 54. The obtaining of the mounting information using the human sensor mounting information obtaining means 51 should only be performed once, for example, when the PC 1 is started or when a new monitor is connected to the communication unit 17.

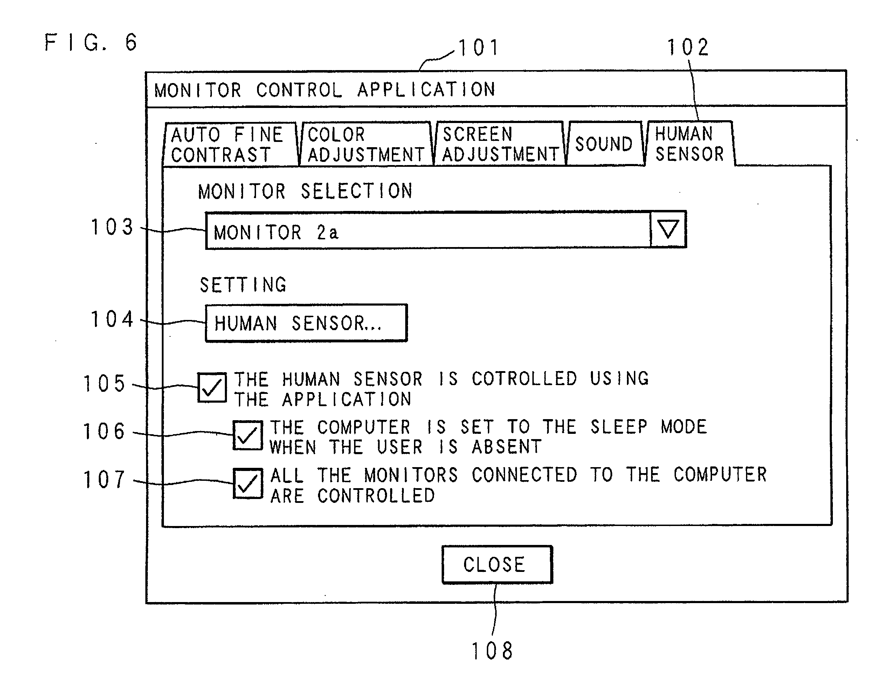

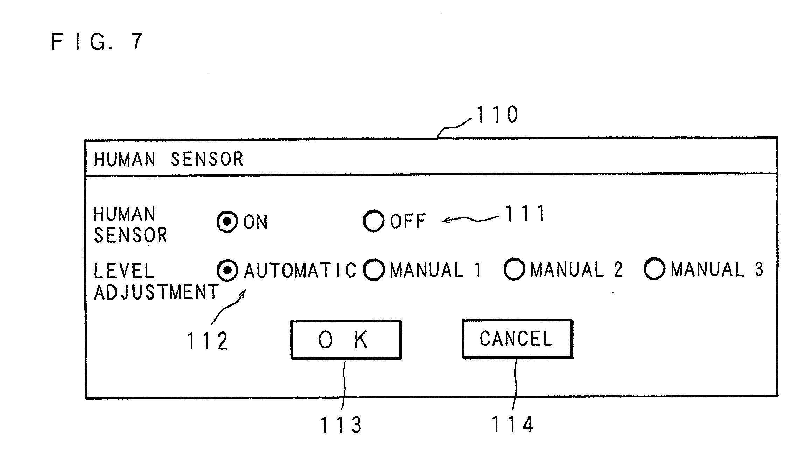

The human sensor setting .accepting means 55 accepts, for example, information as to whether the human sensor 3 mounted on each of the monitors 2a and 2b is used or not (effective or ineffective) and the sensitivity setting of the human sensor 3 from the user, and sends the accepted setting information to the monitor information storing means 54. At this time, the human sensor setting accepting means 55 displays dialogs for accepting the setting at one of the monitors 2a to 2c, and then accepts the setting on the basis of the operation performed for these dialogs by the user using the mouse 5 or the keyboard 6. The configurations of the dialogs displayed by the human sensor setting accepting means 55 will be detailed later (refer to FIGS. 6 and 7).

The monitor information storing means 54 stores the mounting information sent from the human sensor mounting information obtaining means 51 and the setting information sent from the human sensor setting accepting means 55. The monitor state controlling means 53 reads the mounting information and the setting information stored in the monitor information storing means 54 and can perform control process according to the information.

The human sensor detection result obtaining means 52 sends a detection result sending request periodically via the communication unit 17 to the monitors 2a and 2b on each of which the human sensor 3 is mounted, and receives the detection result sent from each of the monitors 2a and 2b in response to the request, thereby obtaining the detection results of all the human sensors 3. The human sensor detection result obtaining means 52 sends the obtained detection results of all the human sensors 3 to the monitor state controlling means 53.

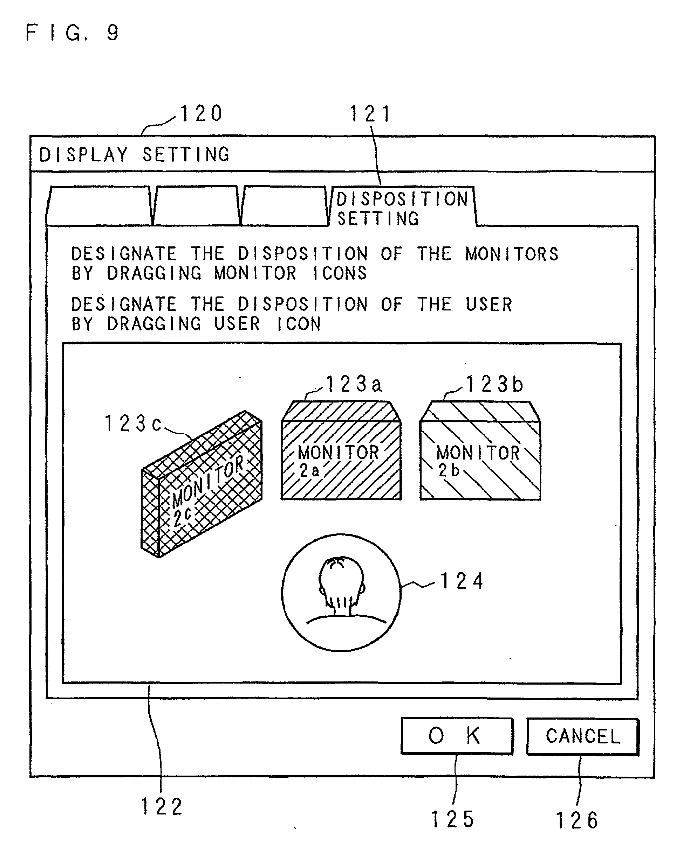

The disposition information accepting means 61 accepts information relating to the disposition of the plurality of monitors 2a to 2c connected to the PC 1 (for example, the monitor 2a is disposed at the center, the monitor 2b is disposed on the right side thereof, the monitor 2c is disposed on the left side thereof, and the user works while facing the monitor 2a) from the user, and sends the accepted disposition information to the disposition information storing means 62. At this time, the disposition information accepting means 61 displays a dialog for accepting the disposition information on one of the monitors 2a to 2c and accepts the disposition information on the basis of the operation performed for the dialog by the user using the mouse 5 or the keyboard 6. The configuration of the dialog displayed by the disposition information accepting means 61 will be detailed later (refer to FIG 9).

The disposition information storing means 62 stores the disposition information sent from the disposition information accepting means 61. The monitor state controlling means 53 can read the disposition information of the monitors 2a to 2c stored in the disposition information storing means 62 and can perform control process according to the information.

The monitor state controlling means 53 determines the operation states (the ordinary operation mode, the sleep mode and the power OFF mode) of the monitors 2a to 2c according to the detection results of the human sensors 3 obtained by the human sensor detection result obtaining means 52. When the switching of the operation state is necessary, the monitor state controlling means 53 sends a control instruction relating to the switching of the operation state to each of the monitors 2a to 2c via the communication unit 17. The control instruction sent from the monitor state controlling means 53 of the PC 1 is received by the communication unit 24 of each of the monitors 2a to 2c, and the operation state of each of the monitors 2a to 2c is switched according to the received control instruction.

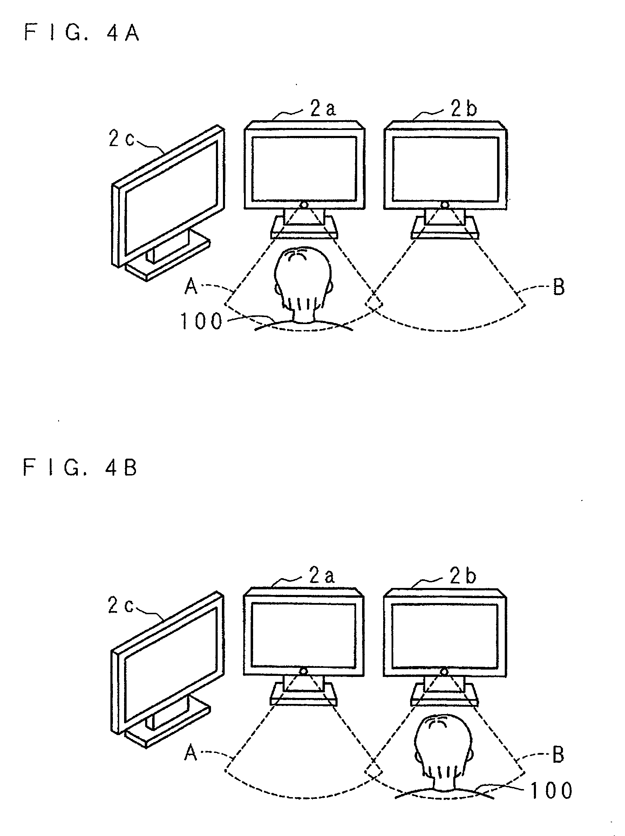

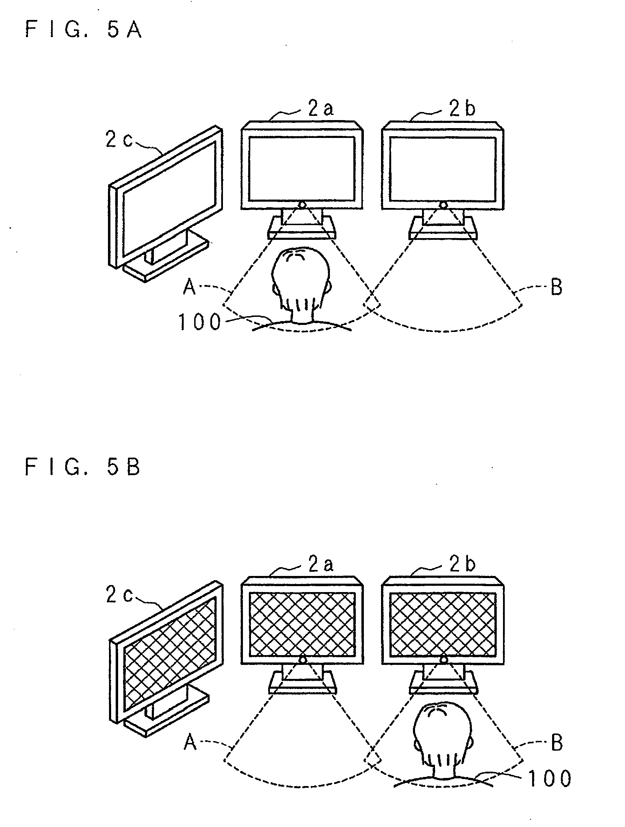

FIGS. 4A to 4C and FIGS. 5A to 5C are schematic views illustrating the control of the monitors 2a to 2c using the monitor state controlling means 53 of the PC 1. FIGS. 4A to 4C show a case in which the two human sensors 3 respectively mounted on the two monitors 2a and 2c are set effective. FIGS. 5A to 5C show a case in which only the human sensor 3 mounted on one monitor 2a is set effective. In the FIGS. 4A to 4C and FIGS. 5A to 5C, the detection range of the human sensor 3 mounted on the monitor 2a is indicated by an area A enclosed by a broken line, and the detection range of the human sensor 3 mounted on the monitor 2b is indicated by an area B enclosed by a broken line.

In the examples shown in the figures, the monitor 2a is disposed at the center, the monitor 2b is disposed on the right side thereof, and the monitor 2c is disposed on the left side thereof. Furthermore, the monitor 2c on the left side is disposed obliquely to a user 100 at an angle of approximately 45° with respect to the other two monitors, that is, the monitors 2a and 2b. Since the two human sensors 3 respectively mounted on the monitors 2a and 2b are both effective, when the user 100 is present in the detection area A of the human sensor 3 of the monitor 2a (refer to FIG. 4A) and when the user 100 is present in the detection area B of the human sensor 3 of the monitor 2b (refer to FIG. 4B), the three monitors 2a to 2c operate in the ordinary operation mode, and an image based on the image signal sent from the PC 1 is displayed on the display unit 22 of each monitor in both the cases.

At this time, the monitor state controlling means 53 of the PC 1 judges that the human sensors 3 mounted on the monitors 2a and 2b are both effective according to the setting information stored in the monitor information storing means 54 and also judges that the presence of the user 100 has been detected by the human sensor 3 of the monitor 2a or 2b according to the detection result sent from the human sensor detection result obtaining means 52. Hence, the monitor state controlling means 53 determines that the three monitors 2a to 2c are operated in the ordinary operation state and sends, to each of the monitors 2a to 2c, a control instruction for operating in the ordinary operation state.

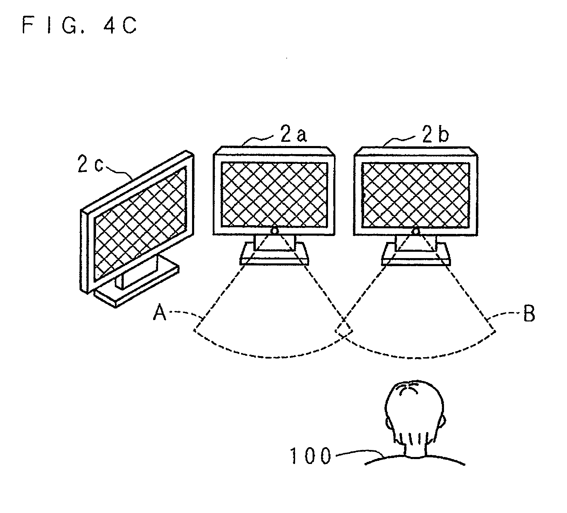

Furthermore, when the user 100 is present outside the detection area A of the human sensor 3 of the monitor 2a and is also present outside the detection area B of the human sensor 3 of the monitor 2b (refer to FIG. 4C), no image is displayed on all the monitors 2a to 2c. The monitors 2a and 2b, on each of which the human sensor 3 is mounted, are in the sleep mode, and the detection of the user 100 using the human sensors 3 is performed continuously. The monitor 2c on which the human sensor 3 is not mounted is in the power OFF mode (the monitor 2c may be in the sleep mode).

At this time, the monitor state controlling means 53 of the PC 1 judges that the presence of the user 100 is not detected by all the human sensors 3, that is, that the user 100 is absent according to the detection result sent from the human sensor detection result obtaining means 52. As a result, the monitor state controlling means 53 sends, to the monitors 2a and 2b on each of which the human sensor 3 is mounted, a control instruction for switching to the sleep mode, and sends, to the monitor 2c on which the human sensor 3 is not mounted, a control instruction for switching to the power OFF mode.

Moreover, in a state in which the human sensor 3 mounted on the center monitor 2a is effective and the human sensor 3 mounted on the right monitor 2b is ineffective and when the user 100 is present in the detection area A of the human sensor 3 of the monitor 2a (refer to FIG. 5A), the three monitors 2a to 2c operate in the ordinary operation mode, and an image based on the image signal sent from the PC 1 is displayed on the display unit 22 of each monitor.

At this time, the monitor state controlling means 53 of the PC 1 judges that the human sensor 3 mounted on the monitor 2a is effective and that the human sensor 3 mounted on the monitor 2b is ineffective according to the setting information stored in the monitor information storing means 54 and also judges that the presence of the user 100 has been detected by the human sensor 3 of the monitor 2a according to the detection result sent from the human sensor detection result obtaining means 52. Hence, the monitor state controlling means 53 determines that the three monitors 2a to 2c are operated in the ordinary operation state and sends, to each of the monitors 2a to 2c, a control instruction for operating in the ordinary operation state.

Furthermore, when the user 100 is present inside the detection area B of the human sensor 3 of the monitor 2b and is also present outside the detection area A of the human sensor 3 of the monitor 2a (refer to FIG. 5B), since the human sensor 3 of the monitor 2b is set ineffective, no image is displayed on all the monitors 2a to 2c.

At this time, the monitor state controlling means 53 of the PC 1 judges that the human sensor 3 mounted on the monitor 2b is ineffective according to the setting information stored in the monitor information storing means 54. For this reason, even when the presence of the user 100 is detected by the human sensor 3 of the monitor 2b according to the detection result sent from the human sensor detection result obtaining means 52, the monitor state controlling means 53 judges that the user 100 is absent. Hence, the monitor state controlling means 53 sends, to the monitor 2a on which the human sensor 3 is mounted, a control instruction for switching to the sleep mode, and sends, to the monitor 2c on which the human sensor 3 is not mounted and to the monitor 2b on which the human sensor 3 having been set ineffective is mounted, a control instruction for switching to the power OFF mode.

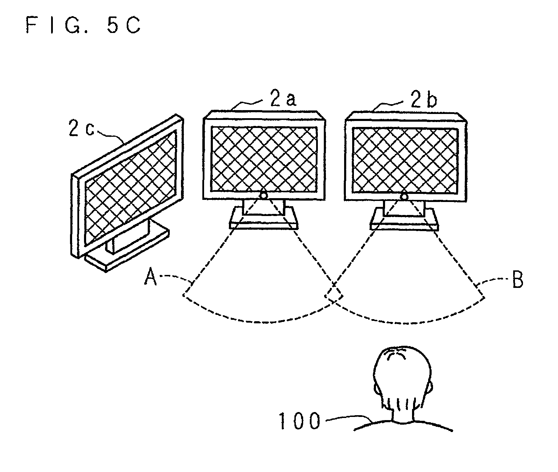

Furthermore, when the user 100 is present outside the detection area A of the human sensor 3 of the monitor 2a and is also present outside the detection area B of the human sensor 3 of the monitor 2b (refer to FIG. 5C), no image is displayed on all the monitors 2a to 2c. This case is similar to the case in which the human sensor 3 of the monitor 2b is effective (refer to FIG. 4C).

As described above, when the presence of the user 100 has been detected using at least one human sensor 3 having been set effective, the monitor state controlling means 53 of the PC 1 operates all the monitors 2a to 2c in the ordinary operation mode. Furthermore, when the presence of the user 100 has not been detected using all the human sensors 3 having been set effective, the monitor state controlling means 53 operates the monitors 2a to 2c on each of which the human sensor 3 having been set effective is mounted in the sleep mode and operates the monitors 2a to 2c on each of which the human sensor 3 having been set ineffective is mounted and the monitors 2a to 2c on each of which the human sensor 3 is not mounted in the power OFF mode. Even in the case of the monitors 2a to 2c on each of which the human sensor 3 is mounted, when the human sensor 3 is set ineffective, the monitor state controlling means 53 operates the monitors 2a to 2c similarly to the monitors 2a to 2c on each of which the human sensor 3 is not mounted.

Moreover, the monitors 2a to 2c on each of which the human sensor 3 having been set effective is mounted are operated in the sleep mode because in the power OFF mode, power supply to the human sensor 3 is stopped and the presence of the user cannot be detected using the human sensor 3. For example, when the monitors 2a to 2c on each of which the human sensor 3 is mounted are operated in the power OFF mode, the monitors 2a to 2c cannot perform the detection using the human sensor 3, and the human sensor detection result obtaining means 52 of the PC 1 cannot obtain the detection result. Hence, the monitor state controlling means 53 cannot return the operation state of each monitor 2a to 2c from the power OFF mode to the ordinary operation mode.

FIGS. 6 and 7 are schematic views illustrating the acceptance of the setting using the human sensor setting accepting means 55 of the PC 1. The dialog 101 shown in FIG. 6 can be displayed on one of the monitors 2a to 2c and the setting relating to the human sensor 3 can be set when the user operates the mouse 5 or the keyboard 6 of the PC 1 in which the power control program 50 has been executed. In the example shown in FIG. 6, the dialog is configured so that one of a plurality of tabs provided in the dialog 101 of a monitor control application is used as a human sensor setting tab 102 and so that the user 100 selects the tab and performs the setting of the human sensor 3. However, this configuration is just an example and another configuration may be used in which a dialog that is used only for the setting of the human sensor 3 is displayed, for example.

The human sensor setting tab 102 is provided with, for example, a combo box 103 for monitor selection, a button 104 for the effectiveness/ineffectiveness setting of the human sensor 3 and a plurality of check boxes 105 to 107. The combo box 103 displays a list of the names of the plurality of monitors 2a to 2c connected to the PC 1 (the display of the list is not shown) to allow the user 100 to select one of the monitors 2a to 2c. The example shown in FIG. 6 indicates a state in which "monitor 2a" is selected and also indicates a state in which the human sensor setting accepting means 55 accepts the setting for the human sensor 3 mounted on the selected monitor 2a.

The button 104 for setting the human sensor 3 can be operated by the user 100 only when each monitor 2a to 2c on which the human sensor 3 is mounted is selected using the combo box 103. When the button 104 is operated by the user 100, the human sensor setting accepting means 55 further displays a human sensor setting dialog 110 shown in FIG. 7 on one of the monitors 2a to 2c. The human sensor setting dialog 110 is provided with a radio button 111 for setting the human sensor to ON/OFF (effective/ineffective), a radio button 112 for adjusting the level (sensitivity) of the human sensor 3, an OK button 113 and a CANCEL button 114, for example.

The radio button 111 has two circular buttons labeled with "ON (effective)" and "OFF (ineffective)" respectively and the user 100 can select one of the two items, ON and OFF. A black circle is indicated in the selected button. The example shown in FIG. 7 indicates a state in which the human sensor 3 is set to ON. Hence, the human sensor setting accepting means 55 can accept the effectiveness/ineffectiveness setting of the human sensor 3.

The radio button 112 has four circular buttons labeled with "AUTOMATIC", "MANUAL 1", MANUAL 2" and "MANUAL 3" respectively, and the user 100 can select one of the four items. The radio button 112 can be operated by the user 100 only when the human sensor 3 has been set to ON using the radio button 11. The example shown in the figure indicates a state in which the level adjustment of the human sensor 3 has been set to AUTOMATIC.

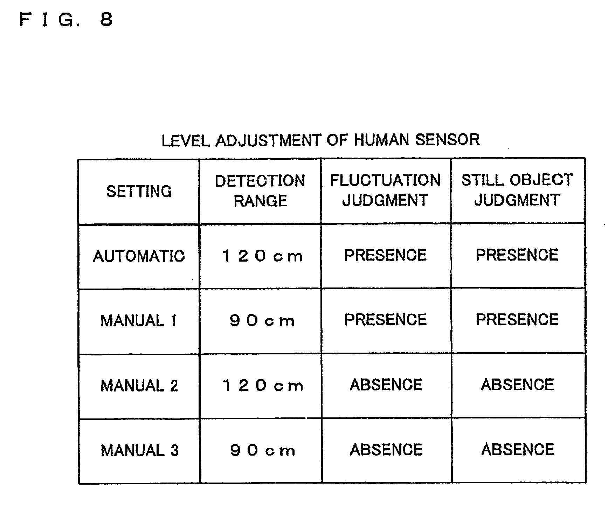

In the embodiment, in the monitors 2a and 2b on each of which the human sensor 3 is mounted, the level (sensitivity) of the human sensor 3 can be adjusted with respect to (1) the range of detection, (2) the presence or absence of fluctuation judgment and (3) the presence or absence of still object judgment depending on the selection at the radio button 112. FIG. 8 is a table illustrating the level adjustment of the human sensor 3.

In this example, the detection range of the human sensor 3 can be adjusted in two stages, 120 cm and 90 cm. When "AUTOMATIC" or "MANUAL 2" is selected using the level adjustment radio button 112 of the human sensor setting dialog 110, the detection range of the human sensor 3 is adjusted to 120 cm. When "MANUAL 1" or "MANUAL 3" is selected using the level adjustment radio button 112, the detection range of the human sensor 3 is adjusted to 90 cm.

When the user 100 enters a preset detection range, each monitor 2a to 2c on which the human sensor 3 is mounted judges immediately that the user 100 is present and sends the detection result indicating that the user 100 is present in response to a request from the PC 1. On the other hand, in the case that the user 100 goes out of the preset detection range, when a time period of five seconds has passed after the human sensor 3 detected the absence of the user 100, each monitor 2a to 2c on which the human sensor 3 is mounted sends the detection result indicating that the user 100 is absent in response to a request from the PC 1. In other words, even if the human sensor 3 detected the absence of the user 100, when the presence of the user 100 is detected before the time period of five seconds has passed, each monitor 2a to 2c on which the human sensor 3 is mounted does not send to the PC 1 the detection result indicating that the user 100 is absent.

The fluctuation judgment for the human sensor 3 is used to further limit the detection range of the human sensor 3 described above. The user 100 who works using the PC 1 and the monitors 2a to 2c does not stay still for a long time during the work but moves in the range of approximately several centimeters to several ten centimeters (this movement is referred to as fluctuation). The each monitor 2a to 2c on which the human sensor 3 is mounted stores the fluctuation range of the user 100 on the basis of the detection result of the human sensor 3. When the user 100 is present inside the fluctuation range, the monitor sends to the PC 1 the detection result indicating that the user 100 is present. Furthermore, when the user 100 is not present inside the fluctuation range and that the time period of five seconds has passed, each monitor 2a to 2c on which the human sensor 3 is mounted sends to the PC 1 the detection result indicating that the user 100 is absent.

When "AUTOMATIC" or "MANUAL 1" is selected using the level adjustment radio button 112 of the human sensor setting dialog 110, each monitor 2a to 2c on which the human sensor 3 is mounted makes the fluctuation judgment. However, when "MANUAL 2" or "MANUAL 3" is selected using the level adjustment radio button 112, the fluctuation judgment is not made.

The still object judgment is made to prevent still objects other than the user 100 from being detected mistakenly using the human sensor 3. For example, when the PC 1 and the monitors 2a to 2c are disposed on a desk, there is a possibility that the peripheral devices of the PC 1, such as the mouse 5 and the keyboard 6, and various objects such as documents, a telephone and writing materials, may present therearound. When the human sensor 3 is configured so as to detect the user 100 by detecting a reflected wave of an ultrasonic wave, for example, the human sensor 3 may detect not only the user 100 but also other objects disposed inside the detection range thereof. For this reason, even if the human sensor 3 detects the user 100 or another object inside the detection range thereof, when the detection position of the object is unchanged for a time period of 60 seconds or more, each monitor 2a to 2c on which the human sensor 3 is mounted judges that the detected object is a still object other than the user 100 and sends to the PC 1 the detection result indicating that the user 100 is absent. In other words, even if the user 100 is actually outside the detection range of the human sensor 3, when another object, i.e., a still object, is present inside the detection range, each monitor 2a to 2c can send the absence of the user 100 after a time period of 60 seconds has passed from the detection of the still object.

When "AUTOMATIC" or "MANUAL 1" is selected using the level adjustment radio button 112 of the human sensor setting dialog 110, each monitor 2a to 2c on which the human sensor 3 is mounted makes the still object judgment. When "MANUAL 2" or "MANUAL 3" is selected using the level adjustment radio button 112, the still object judgment is not made.

The settings of the detection range, the presence or absence of the fluctuation judgment and the presence or absence of the still object judgment can be made different depending on each of the monitors 2a to 2c connected to the PC 1. When the OK button 113 is operated, the settings performed using the human sensor setting dialog 110 are accepted using the human sensor setting accepting means 55 and stored in the monitor information storing means 54, and the monitor state controlling means 53 sends the settings via the communication unit 17 to the monitors 2a to 2c to be subjected to the settings. The each monitor 2a to 2c having received the settings stores the settings using the control unit 21, and the control unit 21 adjusts the detection range and makes the fluctuation judgment and the still object judgment according to the settings. When the CANCEL button 114 is operated in the human sensor setting dialog 110, the human sensor setting accepting means 55 does not accept the settings, and the human sensor setting dialog 110 is closed.

Since the adjustment of the detection range, the fluctuation judgment and the still object judgment using the human sensor 3 are respectively performed in each monitor 2a to 2c in the display system according to the embodiment, the PC 1 should only obtain the detection result received from each monitor 2a to 2c without considering the adjustment and the judgments. Hence, the PC 1 is not required to perform the adjustment of the detection range, the fluctuation judgment and the still object judgment for the plurality of human sensors 3. As a result, even when the numerous monitors 2a to 2c are connected to the PC 1, the process load on the PC 1 does not increase. However, it may be possible to use a configuration in which the adjustment and judgments are performed by the PC 1.

The check boxes 105 to 107 provided in the monitor control application dialog 101 are not used to accept the settings for one of the monitors 2a to 2b selected using the combo box 103 for monitor selection, but are used to accept the settings for all the monitors 2a to 2c connected to the PC 1.

When at least one of the monitors 2a to 2c on each of which the human sensor 3 is mounted is connected to the PC 1 and that at least one human sensor 3 is set to ON in the human sensor setting dialog 110, the check box 105 can be operated. The check box 105 is labeled with "the human sensor is controlled using the application" and is used to accept the setting as to whether the control for switching the state of each monitor 2a to 2c on the basis of the detection result of the human sensor 3 is performed. When the check box 105 is checked, the power control program 50 of the PC 1 obtains the detection result of the human sensor 3 and switches each monitor 2a to 2c on which the human sensor 3 is mounted to the ordinary operation mode or the sleep mode according to the obtained detection result. However, even when the check box 105 is checked, if the check box 107 described later is not checked, each monitor 2a to 2c on which the human sensor 3 is not mounted is not controlled. Furthermore, when the check box 105 is not checked, the power control program 50 does not perform the control process according to the detection result of the human sensor 3, and the operation according to the human sensor 3 is performed by the each monitor 2a to 2c.

The check box 106 can be operated when the check box 105 has been checked. The check box 106 is labeled with "the computer is set to the sleep mode when the user is absent" and is used to accept the setting as to whether the operation state of the PC 1 is controlled according to the detection result of the human sensor 3. The PC 1 can perform operation while the operation state thereof is switched between the sleep mode in which the operations of the respective units, such as the display processing unit 13, the hard disk 14 and the disk drive 15, are stopped to reduce power consumption and the ordinary operation mode in which the respective units are operated to perform ordinary operation requiring ordinary power consumption. When the check box 106 is checked and that the absence of the user 100 is detected using the human sensors 3 of the monitors 2a to 2c, the power control program 50 of the PC 1 sets the monitor 2a to 2b to the sleep mode or the power OFF mode to reduce power consumption and then sets the PC 1 to the sleep mode to further reduce power consumption. However, the return from the sleep mode to the ordinary operation mode of the PC 1 is performed when the mouse 5 or the keyboard 6 is operated by the user 100. When the PC 1 is in the sleep mode, the control of the monitors 2a to 2c on the basis of the detection result of the human sensor 3 cannot be performed. For this reason, after the PC 1 was switched to the sleep mode, the monitors 2a to 2c cannot be switched to the ordinary operation mode and cannot perform display until the mouse 5 or the keyboard 6 is operated.

The check box 107 can be operated when the check box 105 has been checked. The check box 107 is labeled with "all the monitors connected to the computer are controlled" and is used to accept the setting as to whether the control of the monitors 2a to 2c on each of which the human sensor 3 is not mounted is performed on the basis of the detection results of the human sensors 3 mounted on the other monitors 2a to 2c. When the check box 107 is checked, the state switching of all the monitors 2a to 2c is controlled using the power control program 50 as shown in FIGS. 4A to 4C and FIGS. 5A and 5C. When the check box 107 is not checked, the power control program 50 controls only the monitors 2a to 2c on each of which the human sensor 3 is mounted.

A button 108 labeled with "CLOSE" is provided in the lowermost section of the monitor control application dialog 101, and when the button 108 is operated, the dialog 101 is closed. At this time, the human sensor setting accepting means 55 of the PC 1 accepts the settings having been set in the dialog 101 and stores the settings in the monitor information storing means 54. The monitor state controlling means 53 reads the settings stored in the monitor information storing means 54 and sends control instructions to the respective monitors 2a to 2c.

FIG. 9 is a schematic view illustrating the acceptance of the disposition information using the disposition information accepting means 61 of the PC 1. The display setting dialog 120 shown in FIG. 9 can be displayed on one of the monitors 2a to 2c and the disposition information of the monitors 2a to 2c can be input by the user through the operation of the mouse 5 or the keyboard 6 in the PC 1 having executed OS 60. The display setting dialog 120 is provided with a plurality of tabs, and one of them is used as a disposition setting tab 121 for the monitors 2a to 2c.

The disposition setting tab 121 is provided with a disposition area 122 in which the disposition of the monitors 2a to 2c and the user 100 is designated using icons. In the disposition area 122, monitor icons 123a to 123c respectively corresponding to the monitors 2a to 2c connected to the PC 1 and a user icon 124 corresponding to the user 100 are displayed. The monitor icons 123a to 123c or the user icon 124 can be moved inside the disposition area 122 when the user 100 performs drag-and-drop operations using the mouse 5.

The monitor icons 123a to 123c each have a shape resembling that of the monitors 2a to 2c (for example, a flat cube) and their directions can be changed by performing drag-and-drop operations using the mouse 5. In the example in the figure, the left monitor icon 123c is disposed at approximately 45° with respect to the two monitor icons 123a and 123b. It is supposed that the directions of the monitor icons 123a to 123c can be changed by performing drag-and-drop operations for an apex or a side of the cube, for example, using the mouse 5.

Furthermore, the monitor icons 123a to 123c are displayed in different colors depending on whether the human sensor 3 is mounted on each of the monitors 2a to 2c corresponding thereto, and when the human sensor 3 is mounted, depending on whether the human sensor 3 is set effective or ineffective. For example, when the human sensor 3 is mounted on the monitor 2a and is set effective, the monitor icon 123a is displayed in red. When the human sensor 3 is mounted on the monitor 2b and is set ineffective, the monitor icon 123b is displayed in green. Furthermore, when the human sensor 3 is not mounted on the monitor 2c, the monitor icon 123c is displayed in gray. (In FIG. 9, hatching is used instead of color to identify each of the monitor icons 123a to 123c.)

The user icon 124 is an icon having an approximately circular shape, and an image resembling the user 100 is displayed therein. The user icon 124 can be disposed at any position inside the disposition area 122. The user 100 disposes the user icon 124 at a position where he or she is mainly located during work with respect to the disposition of the monitor icons 123a to 123c. In the example shown in the figure, the user icon 124 is disposed on the front face side of the monitor icon 123a indicating the monitor 2a.

An OK button 125 and a CANCEL button 126 are provided in the lowermost section of the display setting dialog 120. When the user 100 operates the OK button 125 after appropriately disposing the monitor icons 123a to 123c and the user icon 124 in the disposition area 122, the disposition information accepting means 61 of the PC 1 obtains, for example, the coordinates in which the monitor icons 123a to 123c are disposed and identifies the disposition of the monitors 2a to 2c and then accepts the disposition as disposition information. Furthermore, the disposition information accepting means 61 obtains, for example, the coordinates in which the user icon 124 is disposed and identifies the work position of the user 100 who uses the monitors 2a to 2c and then accepts the work position together with the disposition information of the monitors 2a to 2c. The disposition information of the monitors 2a to 2c and the work position of the user 100 accepted by the disposition information accepting means 61 are stored in the disposition information storing means 62. When the CANCEL button 126 is operated in the display setting dialog 120, the acceptance using the disposition information accepting means 61 and the storage using the disposition information storing means 62 are not performed.

As described above, the monitor state controlling means 53 can judge whether the human sensor 3 mounted on each of the plurality of monitors 2a to 2c is effective or ineffective depending on the ON/OFF setting of the human sensor 3 having been set in the human sensor setting dialog 110 shown in FIG. 7. However, a configuration may be used in which the judgment as to whether the human sensor 3 is effective or ineffective is made according to the disposition information of the monitors 2a to 2c and the work position of the user 100 having been set in the display setting dialog 120 shown in FIG. 9.

In this case, the monitor state controlling means 53 reads the disposition information of the monitors 2a to 2c and the work position of the user 100 from the disposition information storing means 62 and can control the plurality of monitors 2a to 2c, for example, while making only the human sensor 3 mounted on the monitors 2a to 2c disposed to face the user 100 effective and making the human sensor 3 mounted on the other monitors 2a to 2c ineffective. In the example shown in FIG. 9, since the monitor 2a is disposed so as to face the user 100, the monitor state controlling means 53 performs control while making the human sensor 3 mounted on the monitor 2a effective and making the human sensor 3 mounted on each of the other monitors 2b and 2c ineffective. The control performed by the monitor state controlling means 53 is the same as that shown in FIGS. 5A to 5C.

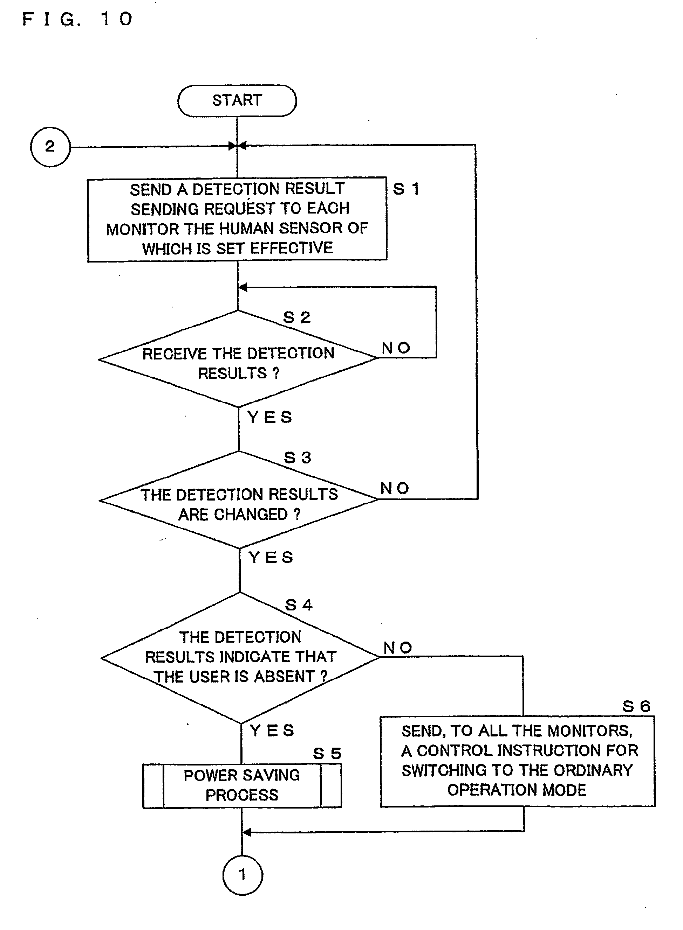

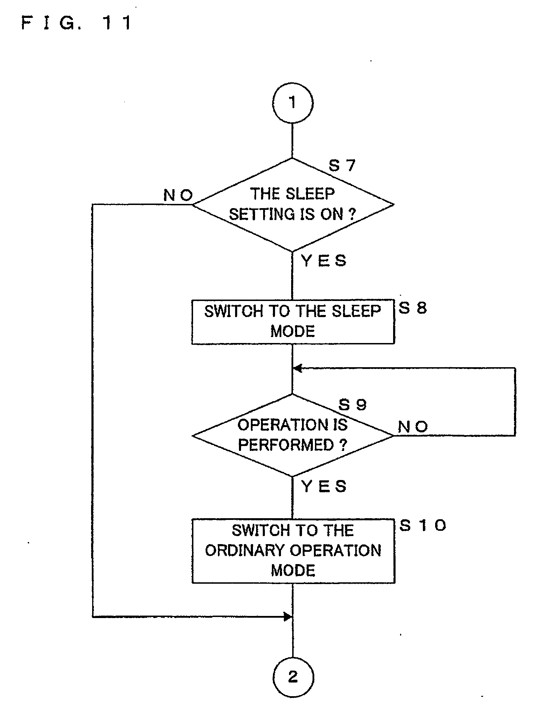

FIGS. 10 and 11 are flowcharts showing the procedure of the process to be performed by the PC 1 of the display system according to the present invention, and the process is performed by the CPU 11 executing the power control program 50. First, on the basis of the information stored in the monitor information storing means 54 (or the information stored in the disposition information storing means 62), the CPU 11 sends, via the communication unit 17, a detection result sending request to each monitor 2a to 2c the human sensor 3 of which is set effective (at step S1).

Then, the CPU 11 judges whether the communication unit 17 has received, from the monitors 2a to 2c, all the detection results serving as the responses to the sending requests (at step S2). When the detection results from all the monitors 2a to 2c on each of which the human sensor 3 is mounted are not received (NO at step S2), the CPU 11 stands by until all the detection results are received. When all the detection results are received (YES at step S2), the CPU 11 compares the received detection results with the detection results received in the past and judges whether the detection results are changed (at step S3). When the received detection results are not changed (NO at step S3), the CPU 11 returns to step S1 and repeats the process of the above-mentioned steps S1 to S3.

When the received detection results are changed (YES at step S3), the CPU 11 judges whether the detection results indicate that the user 100 is absent (in other words, whether the detection results indicate that the presence of the user 100 is not detected) (at step S4). When the detection results indicate that the user 100 is absent (YES at step S4), the CPU 11 performs power saving process to reduce the power consumption of the monitors 2a to 2c (at step S5), and the CPU 11 advances to step S7. When the detection results indicate that the user 100 is not absent (NO at step S4), that is, when the user 100 is present, the CPU 11 sends, from the communication unit 17 to all the monitors 2a to 2c, a control instruction for switching all the monitors 2a to 2c to the ordinary operation mode (at step S6), and the CPU 11 advances to step S7.

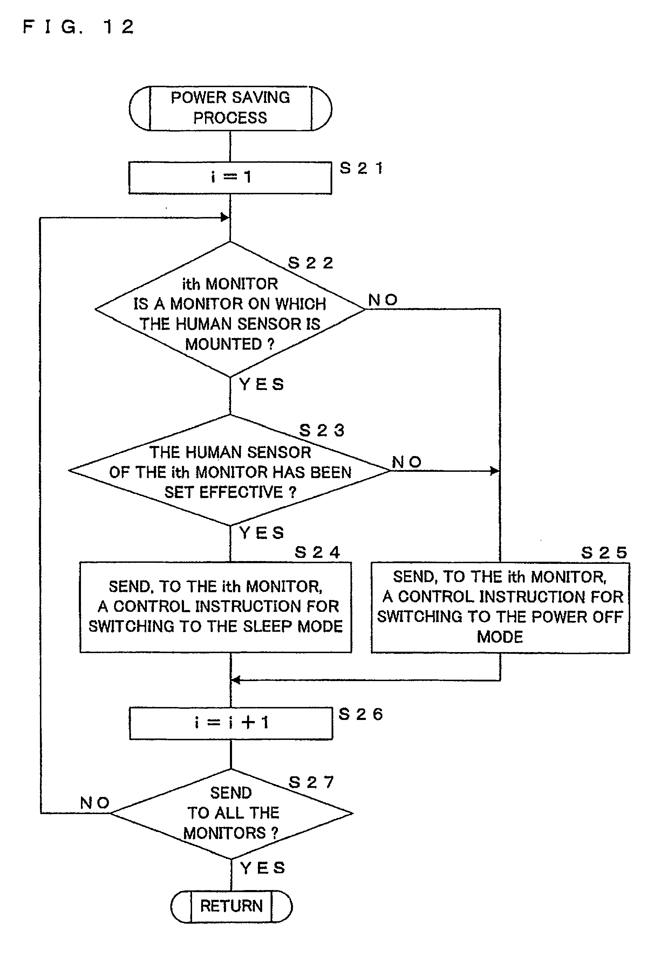

FIG. 12 is a flowchart showing the procedure of the power saving process to be performed by the PC 1 of the display system according to the present invention, and the process is performed by the CPU 11 at step S5 of the flowcharts shown in FIGS. 10 and 11. In the power saving process shown in FIG. 12, the process is performed using a variable i accomplished using a register of the CPU 11 or a storage area of the memory 12, for example.

In the power saving process, first, the CPU 11 initialize the value of the variable i to 1 (at step S21). On the basis of the human sensor mounting information preliminarily obtained using the human sensor mounting information obtaining means 51 and stored in the monitor information storing means 54, the CPU 11 judges whether the ith monitor (2a to 2c) (simply referred to as the ith monitor in FIG. 12) is a monitor on which the human sensor 3 is mounted (at step S22). When the ith monitor (2a to 2c) is a monitor on which the human sensor 3 is mounted (YES at step S22), the CPU 11 further judges whether the human sensor 3 of the ith monitor (2a to 2c) has been set effective on the basis of the human sensor setting information preliminarily accepted using the human sensor setting accepting means 55 and stored in the monitor information storing means 54 (or on the basis of the disposition information of the monitors 2a to 2c preliminarily accepted using disposition information accepting means 61 and stored in the disposition information storing means 62) (at step S23).

When the human sensor 3 mounted on the ith monitor (2a to 2c) is effective (YES at step S23), the CPU 11 sends, to the ith monitor (2a to 2c), a control instruction for switching to the sleep mode (at step S24) and then advances to step S26. When the ith monitor (2a to 2c) is a monitor on which the human sensor 3 is not mounted (NO at step S22) or when the human sensor 3 mounted on the ith monitor (2a to 2c) is not effective (NO at step S23), the CPU 11 sends, to the ith monitor (2a to 2c), a control instruction for switching to the power OFF mode (at step S25) and then advances to step S26.

After sending the control instruction to the ith monitor (2a to 2c), the CPU 11 adds 1 to the value of the variable i (at step S26) and judges whether the sending of the control instruction to all the monitors 2a to 2c connected to the PC 1 has been completed (at step S27). This judgment can be made by checking whether the value of the variable i has exceeded the number of the monitors 2a to 2c connected to the PC 1. When the sending of the control instruction to all the monitors 2a to 2c has not been completed (NO at step S27), the CPU 11 returns to step S22 and repeats the process of steps S22 to S26 until the sending of the control instruction to all the monitors 2a to 2c is completed. When the sending of the control instruction to all the monitors 2a to 2c has been completed (YES at step S27), the CPU 11 completes the power saving process and returns to the process shown in the flowcharts of FIGS. 10 and 11.

After step S5 or after the sending of the control instruction to all the monitors 2a to 2c at step S6, the CPU 11 judges whether the sleep setting of the PC 1 is ON (at step S7). The sleep setting of the PC 1 is set using the check box 106 provided in the monitor control application dialog 101 shown in FIG. 6, and the setting is accepted using the human sensor setting accepting means 55 and stored in the monitor information storing means 54. Hence, the CPU 11 reads the setting and can judge the setting.

When the sleep setting of the PC 1 is ON (YES at step S7), the CPU 11 is switched to the sleep mode (at step S8). Then, the CPU 11 judges whether operation by the user 100 is performed using the mouse 5 or keyboard 6 (at step S9). When the user 100 does not operate (NO at step S9), the CPU 11 stands by until the user 100 operates. When the user 100 operates (YES at step S9), the CPU 11 is switched to the ordinary operation mode (at step S10) and then returns to step S1 and repeats the above-mentioned process.

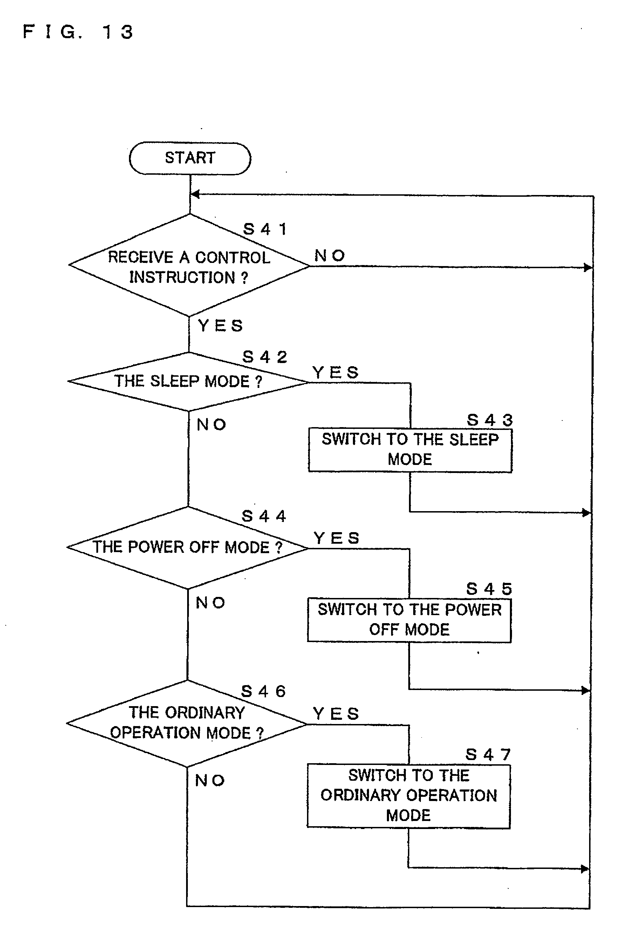

FIG. 13 is a flowchart showing the procedure of the process to be performed by the monitors 2a to 2c of the display system according to the present invention, and the process is performed by the control unit 21 of each of the monitors 2a to 2c. First, the control unit 21 of each of the monitors 2a to 2c judges whether a control instruction from the PC 1 is received at the communication unit 24 (at step S41). When the control instruction is not received (NO at step S41), the control unit 21 stands by until the control instruction is received.

When that the control instruction from the PC 1 is received (YES at step S41), the control unit 21 judges whether the received control instruction relates to the switching to the sleep mode (at step S42). When the received control instruction relates to the switching to the sleep mode (YES at step S42), the control unit 21 switches the operation state of each of the monitors 2a to 2c to the sleep mode (at step S43). The control unit 21 returns to step S41 and stands by until a new control instruction is received.

When the control instruction does not relate to the switching to the sleep mode (NO at step S42), the control unit 21 judges whether the received control instruction relates to the switching to the power OFF mode (at step S44). When the control instruction relates to the switching to the power OFF mode (YES at step S44), the control unit 21 switches the operation state of each of the monitors 2a to 2c to the power OFF mode (at step S45). The control unit 21 returns to step S41 and stands by until a new control instruction is received.

When the control instruction does not relate to the switching to the power OFF mode (NO at step S44), the control unit 21 judges whether the received control instruction relates to the switching to the ordinary operation mode (at step S46). When the control instruction relates to the switching to the ordinary operation mode (YES at step S46), the control unit 21 switches the operation state of each of the monitors 2a to 2c to the ordinary operation mode (at step S47). The control unit 21 returns to step S41 and stands by until a new control instruction is received. Furthermore, when the received control instruction does not relate to the switching to the ordinary operation mode (NO at step S46), that is, when the control instruction is an instruction other than that relating to the switching of the operation mode, the control unit 21 returns to step S41 and stands by until a new control instruction is received.

In the display system configured as described above and in a multi-monitor environment in which the plurality of monitors 2a to 2c are connected to the PC 1, with a configuration in which the human sensor 3 is mounted on at least one of the monitors 2a to 2c, and the PC 1 performs control to switch the operation states (the ordinary operation mode, the sleep mode or the power OFF mode) of the plurality of monitors 2a to 2c according to the detection result of the human sensor 3, when the user 100 is absent, the PC 1 can switch the monitors 2a to 2c to an operation state of low power consumption (the sleep mode or the power OFF mode) without requiring that the user 100 operates the power switches or the like of the monitors 2a to 2c. Hence, power control suited for the monitors 2a to 2c can be performed depending on the work state of the user 100 in the multi-monitor environment. As a result, the power consumption of the plurality of monitors 2a to 2c can be reduced when the monitors are not used, and power saving can be accomplished securely.

Furthermore, with a configuration in which the monitors 2a to 2c are operated in the sleep mode or the power OFF mode when all the human sensors 3 detect the absence of the user 100, and the monitors 2a to 2c are operated in the ordinary operation mode when at least one of the human sensors 3 detects the presence of the user 100, power consumption can be reduced securely when the user does not work in the multi-monitor environment, and when the user starts working, the display on the monitors 2a to 2c can be started automatically.

Furthermore, with a configuration in which when the human sensor 3 is mounted on each of the plurality of monitors 2a to 2c and that the PC 1 can obtain the detection results of the plurality of human sensors 3, the PC 1 judges whether each human sensor 3 is effective or ineffective and controls the monitors 2a to 2c according to the detection result of the effective human sensor 3, it is possible, for example, to suppress the human sensor 3 from detecting a human working near the user 100 who uses the multi-monitor environment and to suppress the PC 1 from mistakenly controlling the monitors 2a to 2c.

The judgment as to whether the human sensor 3 is effective or ineffective can be made by using a configuration in which the PC 1 accepts the setting for the effectiveness/ineffectiveness of each human sensor 3 through, for example, the human sensor setting dialog 110 shown in FIG. 7 and then performs process on the basis of the accepted setting. With this configuration, the user 100 who uses the multi-monitor environment performs setting appropriately depending on, for example, the usage mode of the monitors 2a to 2c, whereby it is possible to more securely prevent the PC 1 from mistakenly controlling the monitors 2a to 2c.

The judgment as to whether the human sensor 3 is effective or ineffective can also be made by using another configuration in which the PC 1 accepts the disposition information of the monitors 2a to 2c and the position of the user 100 through, for example, the display setting dialog 120 shown in FIG. 9 and then performs process on the basis of the accepted information. With this configuration, for example, even if the user 100 is a beginner, the user can perform the setting easily, and the control of the plurality of monitors 2a to 2c on the basis of the detection results of the human sensors 3 can be used, and power saving can be accomplished easily.

Moreover, with a configuration in which the PC 1 accepts the setting for the sensitivity (level) of each human sensor 3 from the user 100 through, for example, the human sensor setting dialog 110 shown in FIG. 7, the accepted setting is sent from the PC 1 to each of the monitors 2a to 2c, and the sensitivity adjustment is performed in each of the monitors 2a to 2c, the user 100 can adjust the sensitivity of the human sensor 3 depending on, for example, the installation states of the monitors 2a to 2c and the circumstances therearound. With appropriate setting by the user, it is possible to more securely prevent the PC 1 from mistakenly control the monitors 2a to 2c.

In addition, with a configuration in which when the PC 1 operates the monitors 2a to 2c in a state of low power consumption (the sleep mode or the power OFF mode) according to the detection result of the human sensor 3, the PC 1 itself is also switched to the sleep mode, not only the power consumption of the monitors 2a to 2c but also the power consumption of the PC 1 can be reduced when the user 100 is absent.

The embodiment has a configuration in which the PC 1 performs process for controlling the operation states of the plurality of monitors 2a to 2c by executing the power control program 50, and the human sensor mounting information obtaining means 51, the human sensor detection result obtaining means 52, the monitor state controlling means 53, the monitor information storing means 54 and the human sensor setting accepting means 55, for example, shown in FIG. 3 are provided as software functions accomplished by the execution of the power control program 50. However, without being limited to this configuration, it may be possible to have a configuration in which part or all of the respective means are formed of hardware. The disposition information accepting means 61 and the disposition information storing means 62, for example, accomplished by the execution of the OS 60 may also be formed of hardware similarly.

Furthermore, the embodiment has a configuration in which the disposition information accepting means 61 and the disposition information storing means 62 are provided in the OS 60. However, without being limited to this configuration, it may be possible to have a configuration in which the means are provided in the power control program 50. Moreover, the configurations of the dialogs, shown in FIGS. 6, 7 and 9, through which various settings are accepted are just examples and are not limited to the above-mentioned examples. Still further, the embodiment has a configuration in which the PC 1 is switched to the sleep mode after the PC 1 has switched the monitors 2a to 2c to the sleep mode or the power OFF mode according to the detection result of the human sensor 3. However, for example, when program compilation process has been performed in the background in the PC 1 at the time of the switching, it may be possible to have a configuration in which the PC 1 is not switched to the sleep mode.

## Claims

1. A display control device (1) controlling the operations of a plurality of display devices (2a,2b,2c) at least one of the display devices having a human sensor (3) for detecting a presence of a human within a predetermined range, **characterized by** comprising:
communication means (17) for sending/receiving information to/from each display device (2a,2b,2c);
state controlling means (11) for sending, to each display device (2a,2b,2c) via the communication means (17), an instruction for switching a displaying state in which an image is displayed and a low power state in which no image is displayed to reduce power consumption, according to the detection result of the human sensor (3) received via the communication means (17); and
accepting means (11) for accepting a setting of whether the human sensor (3) is effective or ineffective for detecting a presence of a human,
wherein when all the human sensors (3) having been set effective have detected the absence of a human, the state controlling means (11) sends, to all the display devices (2a,2b,2c), an instruction for switching to the low power state.

2. The display control device (1) according to claim 1, wherein the setting is made by the user.

3. The display control device (1) according to claim 1, further comprising judging means (11) for judging whether each human sensor (3) is effective or ineffective according to information relating to the disposition of the display devices (2a,2b,2c).

4. The display control device (1) according to claim 3, wherein the accepting means (11) receives from the user the information relating to the disposition of the display devices (2a,2b,2c).

5. A display system including a plurality of display devices (2a,2b,2c) and the display control device (1) according to any one of claims 1 to 4, **characterized in that**
the display devices (2a,2b,2c) comprise:
state switching means (21) for switching said displaying state and said low power state; and
communication means (24) for sending/receiving information to/from the display control device (1),
at least one of the display devices (2a,2b,2c) comprises:
a configuration such that the detection result of the human sensor (3) is sent to the display control device (1) via the communication means (24),
wherein
the state switching means (21) of each display device (2a,2b,2c) switches the state according to the instruction sent from the display control device (1).

6. The display system according to claim 5, wherein
when the state controlling means (11) has sent, to the display devices (2a,2b,2c), an instruction for switching to the low power state, the display control device (1) operates in the low power state in which power consumption is reduced.

7. The display system according to any one of claims 5 and 6, wherein
the display control device (1) comprises accepting means (11) for accepting a setting for the sensitivity of the human sensor (3), and
the display system comprises adjusting means (21) for adjusting the sensitivity of the human sensor (3) according to the setting accepted by the accepting means (11).

8. A computer program (50) causing a computer (1) to control the operations of a plurality of display devices (2a,2b,2c) at least one of the display devices having a human sensor (3) for detecting a presence of a human within a predetermined range, **characterized by** including:
a sending requesting step of causing the computer (1) to send, to the display device (2a,2b) having the human sensor (3), a request for sending the detection result of the human sensor (3);
a detection result receiving step of causing the computer (1) to receive the detection result of the human sensor (3) as a response to the sending request;
an instruction sending step of causing the computer (1) to send, to each display device (2a,2b,2c), an instruction for switching a displaying state in which an image is displayed and a low power state in which no image is displayed to reduce power consumption, according to the detection result; and
an accepting step of causing the computer (1) to accept a setting of whether the human sensor (3) is effective or ineffective for detecting a presence of a human, wherein
in the instruction sending step, when all the human sensors (3) having been set effective have detected the absence of a human, the computer program (50) causes the computer (1) to send, to all the display devices (2a,2b,2c), an instruction for switching to the low power state.

9. The computer program (50) according to claim 8, further comprising
a judging step of causing the computer (1) to judge whether each human sensor (3) is effective or ineffective according to information relating to the disposition of the display devices (2a,2b,2c).

10. A non-transitory memory product readable by a computer (1), **characterized by** storing the computer program (50) according to claim 8 or claim 9.

## Patentansprüche

1. Eine Anzeigesteuervorrichtung (1) zum Steuern der Operationen einer Vielzahl von Anzeigevorrichtungen (2a, 2b, 2c), wobei mindestens eine der Anzeigevorrichtungen einen Personensensor (3) aufweist um die Anwesenheit einer Person innerhalb eines vorbestimmten Bereichs zu detektieren, **dadurch gekennzeichnet, dass** folgendes vorgesehen ist:
Kommunikationsmittel (17) zum Senden/Empfangen von Information zu/von jeder Anzeigevorrichtung (2a, 2b, 2c);
Zustandssteuermittel (11) zum Senden an jede Anzeigevorrichtung (2a, 2b, 2c) über die Kommunikationsmittel (17) eines Befehls zum Schalten eines Anzeigezustandes in dem ein Bild angezeigt wird und einen Niedrigleistungs-zustand in dem kein Bild angezeigt wird, um den Leistungsverbrauch zu reduzieren und zwar entsprechend dem Detektionsergebnis des Personensensors (3) empfangen über die Kommunikationsmittel (17); und
Annahmemittel (11) zum Annehmen der Einstellung ob der Personensensor (3) effektiv oder ineffektiv ist zum Detektieren der Anwesenheit einer Person,
wobei dann, wenn alle Personensensoren (3) die effektiv eingestellt sind das Nicht-Vorhandensein einer Person detektiert haben, die Zustandssteuermittel (11) an alle Anzeigevorrichtungen (2a, 2b, 2c) einen Befehl schicken, um in den Niederleistungszustand zu schalten.

2. Anzeigesteuervorrichtung (1) nach Anspruch 1, wobei die Einstellung durch den Benutzer vorgenommen wird.

3. Anzeigesteuervorrichtung (1) nach Anspruch 1, wobei ferner Beurteilungsmittel (11) vorgesehen sind um zu beurteilen ob jeder Personensensor (3) effektiv oder ineffektiv ist und zwar entsprechend Information die sich auf die Disposition der Anzeigevorrichtungen (2a, 2b, 2c) erstreckt.

4. Anzeigesteuervorrichtung (1) nach Anspruch 3, wobei die Akzeptiermittel (11) von dem Benutzer Information empfangen, die sich auf die Disposition der Anzeigevorrichtungen (2a, 2b, 2c) beziehen.

5. Ein Anzeigesystem einschließlich einer Vielzahl von Anzeigevorrichtungen (2a, 2b, 2c) und der Anzeigesteuervorrichtung (1) gemäß einem der Ansprüche 1-4, **dadurch gekennzeichnet, dass** die Anzeigevorrichtung (2a, 2b, 2c) folgendes aufweisen:
Zustandsschaltmittel (21) zum Schalten des Anzeigezustands und des erwähnten Niedrigleistungszustands; und
Kommunikationsmittel (24) zum Senden/Empfangen von Information zur/von der Anzeigesteuervorrichtung (1),
wobei mindestens eine der Anzeigevorrichtungen (2a, 2b, 2c) folgendes aufweist:
eine Konfiguration derart, dass das Detektionsergebnis des Personensensors (3) zu der Anzeigesteuervorrichtung (1) geschickt wird, und zwar über die Kommunikationsmittel (24), wobei die Zustandsschaltmittel (21) jede Anzeigevorrichtung (2a, 2b, 2c) den Zustand gemäß der Instruktion gesendet von der Anzeigesteuervorrichtung (1) schaltet.

6. Anzeigesystem nach Anspruch 5, wobei dann, wenn die Zustandssteuermittel (11) zu den Anzeigevorrichtungen (2a, 2b, 2c) einen Befehl zum Schalten in den Niederleistungszustand gesendet haben, die Anzeigesteuervorrichtung (1) in dem Niedrigleistungszustand arbeitet in dem der Leistungsverbrauch mit reduziert ist.

7. Anzeigesystem nach einem der Ansprüche 5-6, wobei die Anzeigesteuervorrichtung (1) Akzeptiermittel (11) aufweist, um die Einstellung für die Empfindlichkeit des Personensensors (3) zu akzeptieren, und wobei das Anzeigesystem Einstellmittel (21) aufweist, um die Empfindlichkeit des Personensensors einzustellen und zwar entsprechend der durch die Akzeptiermittel (11) akzeptierten Einstellungen.

8. Ein Computerprogramm (50) welches einen Computer (1) veranlasst, um die Operationen einer Vielzahl von Anzeigevorrichtungen (2a, 2b, 2c) zu steuern, wobei mindestens einer derselben einen Personensensor (3) aufweist zum Detektieren des Vorhandenseins einer Person innerhalb eines vorbestimmten Bereiches **dadurch gekennzeichnet, dass** folgendes vorgesehen ist:
Ein Sendeanforderungsschritt um den Computers (1) zu veranlassen an die Anzeigevorrichtung (2a, 2b) mit dem Personensensor (3) eine Anforderung zu Senden, zum Senden des Detektionsergebnises des Personensensors (3);
ein Detektionsergebnisempfangsschritt zum Bewirken dass der Computer (1) das Detektionsergebnis des Personensensors (3) empfängt und zwar ansprechend auf die Sendeanforderung;
einen Instruktionssendeschritt zum Bewirken dass der Computer (1) an jede Anzeigevorrichtung (2a, 2b, 2c) einen Befehl schickt zum Schalten eines Anzeigezustandes in dem ein Bild angezeigt wird und ein Niedrigleistungszustand in dem kein Bild angezeigt wird, um den Leistungsverbrauch gemäß dem Detektionsergebnis zu reduzieren; und
ein Akzeptierschritt zum Bewirken dass der Computer (1) die Einstellung akzeptiert ob der Personensensor (3) effektiv ist oder ineffektiv ist zum Detektieren des Vorhandenseins einer Person, wobei
in dem Instruktionssendeschritt, wenn alle Personensensoren (3) effektiv eingestellt sind oder Nicht-Anwesenheit einer Person detektiert haben, das Computerprogramm (50) bewirkt, dass der Computer (1) an alle Anzeigevorrichtungen (2a, 2b, 2c) eine Instruktion oder einen Befehl schickt, um auf den Niedrigleistungszustand zu schalten.

9. Computerprogramm (50) nach Anspruch 8, wobei ferner ein Beurteilungsschritt den Computer (1) veranlasst, um zu beurteilen ob jeder Personensensor (3) effektiv oder ineffektiv ist, und zwar entsprechend Information die sich auf die Disposition der Anzeigevorrichtungen (2a, 2b, 2c) erstreckt.

10. Ein Nicht-flüchtiges Speicherprodukt lesbar durch einen Computer (1), **gekennzeichnet durch** Speichern des Computerprogramms (50) gemäß Anspruch 8 oder 9.

## Revendications

1. Dispositif de commande d'affichage (1) contrôlant les opérations d'une pluralité de dispositifs d'affichage (2a, 2b, 2c), au moins l'un des dispositifs d'affichage comportant un détecteur d'humain (3) pour détecter la présence d'un être humain dans une plage de distance prédéterminée, **caractérisé en ce qu'**il comprend :
des moyens de communication (17) pour envoyer/recevoir des informations vers/en provenance de chaque dispositif d'affichage (2a, 2b, 2c) ;
des moyens de commande d'état (11) pour envoyer, à chaque dispositif d'affichage (2a, 2b, 2c) par l'intermédiaire des moyens de communication (17), une instruction pour commuter entre un état d'affichage dans lequel une image est affichée et un état de faible consommation dans lequel aucune image n'est affichée pour réduire la consommation d'énergie, en fonction du résultat de détection du détecteur d'humain (3) reçu par l'intermédiaire des moyens de communication (17) ; et
des moyens d'acceptation (11) pour accepter un réglage d'après lequel le détecteur d'humain (3) est effectif ou non effectif pour détecter la présence d'un humain,
dans lequel lorsque tous les détecteurs d'humain (3) ayant été réglés comme effectifs ont détecté l'absence d'un humain, les moyens de commande d'état (11) envoient, à tous les dispositifs d'affichage (2a, 2b, 2c), une instruction pour commuter sur l'état de faible consommation.

2. Dispositif de commande d'affichage (1) selon la revendication 1, dans lequel le réglage est fait par l'utilisateur.

3. Dispositif de commande d'affichage (1) selon la revendication 1, comprenant en outre
des moyens d'évaluation (11) pour évaluer si chaque détecteur d'humain (3) est effectif ou non effectif en fonction d'informations concernant la disposition des dispositifs d'affichage (2a, 2b, 2c).

4. Dispositif de commande d'affichage (1) selon la revendication 3, dans lequel les moyens d'acceptation (11) reçoivent de l'utilisateur les informations concernant la disposition des dispositifs d'affichage (2a, 2b, 2c).

5. Système d'affichage comprenant une pluralité de dispositifs d'affichage (2a, 2b, 2c) et le dispositif de commande d'affichage (1) selon l'une quelconque des revendications 1 à 4, **caractérisé en ce que**
les dispositifs d'affichage (2a, 2b, 2c) comprennent :
des moyens de commutation d'état (21) pour commuter entre l'état d'affichage et l'état de faible consommation ; et
des moyens de communication (24) pour envoyer/recevoir des informations vers/en provenance du dispositif de commande d'affichage (1),
au moins l'un des dispositifs d'affichage (2a, 2b, 2c) comprend :
un agencement tel que le résultat de détection du détecteur d'humain (3) est envoyé au dispositif de commande d'affichage (1) par l'intermédiaire des moyens de communication (24),
dans lequel
les moyens de commutation d'état (21) de chaque dispositif d'affichage (2a, 2b, 2c) commutent l'état en fonction des instructions envoyées à partir du dispositif de commande affichage (1).

6. Système d'affichage selon la revendication 5, dans lequel
lorsque les moyens de commande d'état (11) ont envoyé aux dispositifs d'affichage (2a, 2b, 2c) une instruction pour commuter sur l'état de faible consommation, le dispositif de commande d'affichage (1) fonctionne dans l'état de faible consommation dans lequel la consommation d'énergie est réduite.

7. Système d'affichage selon l'une quelconque des revendications 5 et 6, dans lequel
le dispositif de commande d'affichage (1) comprend des moyens d'acceptation (11) pour accepter un réglage de la sensibilité du détecteur d'humain (3), et
le système d'affichage comprend des moyens d'ajustement (21) pour ajuster la sensibilité du détecteur d'humain (3) en fonction du réglage accepté par les moyens d'acceptation (11).

8. Programme d'ordinateur (50) amenant un ordinateur (1) à contrôler les opérations d'une pluralité de dispositifs d'affichage (2a, 2b, 2c), au moins l'un des dispositifs d'affichage comportant un détecteur d'humain (3) pour détecter la présence d'un humain dans une plage de distance prédéterminée, **caractérisé en ce qu'**il comprend :
une étape de requête d'envoi pour amener l'ordinateur (1) à envoyer, au dispositif d'affichage (2a, 2b) comportant le détecteur d'humain (3), une requête pour envoyer le résultat de détection du détecteur d'humain (3) ;
une étape de réception de résultat de détection pour amener l'ordinateur (1) à recevoir le résultat de détection du détecteur d'humain (3) en réponse à la requête d'envoi ;
une étape d'envoi d'instructions pour amener l'ordinateur (1) à envoyer, à chaque dispositif d'affichage (2a, 2b, 2c), une instruction pour commuter entre un état d'affichage dans lequel une image est affichée et un état de faible consommation dans lequel aucune image n'est affichée pour réduire la consommation d'énergie, en fonction du résultat de détection ; et
une étape d'acceptation pour amener l'ordinateur (1) à accepter un réglage d'après lequel le détecteur d'humain (3) est effectif ou non effectif pour détecter la présence d'un humain, dans lequel
dans l'étape d'envoi d'instructions, lorsque tous les détecteurs d'humain (3) ayant été réglés comme effectifs ont détecté l'absence d'humain, le programme d'ordinateur (50) amène ordinateur (1) à envoyer, à tous les dispositifs d'affichage (2a, 2b, 2c), une instruction pour commuter sur l'état de faible consommation.

9. Programme d'ordinateur (50) selon la revendication 8, comprenant en outre
une étape d'évaluation pour amener l'ordinateur (1) à évaluer si chaque détecteur d'humain (3) est effectif ou non effectif en fonction d'informations concernant la disposition des dispositifs d'affichage (2a, 2b, 2c).

10. Produit à mémoire non transitoire lisible par un ordinateur (1), **caractérisé en ce qu'**il mémorise le programme d'ordinateur (50) selon la revendication 8 ou la revendication 9.
